# FASCICULE DE BREVET EUROPEEN

(11) **EP 3 379 308 B1**
(45) Date de publication et mention de la délivrance du brevet: **30.10.2019**
(21) Numéro de dépôt: 18161597.2
(22) Date de dépôt: 13.03.2018
(51) Int. Cl.: G02B 6/30, G02B 6/42, G02B 6/36

(54) **PROCÉDÉ DE MISE EN VIS-À-VIS DES EXTRÉMITÉS DE FIBRES OPTIQUES AVEC DES EXTRÉMITÉS DE GUIDES D'ONDE ET UNE STATION DE TEST AGENCÉE POUR EXÉCUTER LA MÉTHODE**
VERFAHREN ZUR GEGENÜBERSTELLUNG DER EXTREMITÄTEN VON OPTISCHEN FASERN UND VON LICHTWELLENLEITERN UND EINE PRÜFSTATION, DIE ZUR DURCHFÜHRUNG DES VERFAHRENS GEIGNET IST
METHOD FOR PLACING ENDS OF OPTICAL FIBRES OPPOSITE WAVEGUIDE ENDS AND A TEST STATION ARRANGED TO PERFORM THE METHOD

(30) Priorité: 20.03.2017 FR 1752269
(43) Date de publication de la demande: 26.09.2018
(73) Titulaire: Commissariat à l'Energie Atomique et aux Energies Alternatives, 75015 Paris (FR)
(72) Inventeur: GROSSE, Philippe, 38360 SASSENAGE (FR); CARPENTIER, Jean-François, 38100 GRENOBLE (FR); LE MAITRE, Patrick, 38330 BIVIERS (FR)
(74) Mandataire: Cabinet Beaumont

(56) Documents cités:
- GB-A- 2 374 156
- US-A1- 2005 220 437
- US-B1- 6 618 514

## Description

### Domaine

La présente demande concerne un procédé de mise en vis-à-vis des extrémités de fibres optiques avec des extrémités de guides d'onde d'une tranche semiconductrice. La présente demande concerne également une station de test adaptée à la mise en œuvre d'un tel procédé.

### Exposé de l'art antérieur

Des circuits optiques intégrés comprenant des guides d'onde sont couramment fabriqués à partir d'une tranche d'un matériau semiconducteur ou tranche semiconductrice. Cette tranche est ensuite découpée pour obtenir une pluralité de puces individuelles.

Avant l'étape de découpe, des tests sont effectués pour vérifier que les circuits optiques sont fonctionnels. Pour tester un circuit optique intégré, un signal lumineux à la longueur d'onde de fonctionnement du circuit est injecté au niveau d'une entrée optique du circuit, et un signal de sortie, lumineux ou électrique, est observé au niveau d'une sortie correspondante du circuit. Chaque entrée ou sortie optique du circuit est par exemple constituée d'un réseau de couplage à une extrémité d'un guide d'onde. Lors du test, une fibre optique est utilisée pour injecter le signal lumineux dans le circuit. Pour cela, la fibre est amenée au-dessus du circuit optique intégré, la position de l'extrémité de la fibre est repérée, et la fibre est déplacée par rapport à la tranche semiconductrice pour positionner grossièrement l'extrémité de la fibre, c'est-à-dire l'extrémité de son cœur, en vis-à-vis d'une entrée optique du circuit. Un réglage fin est ensuite effectué en déplaçant légèrement l'extrémité de la fibre par rapport à cette entrée optique pendant que la valeur d'un signal de sortie correspondant est mesurée. Le réglage final est atteint lorsque la valeur de ce signal de sortie est maximale. Lorsque ce signal de sortie est un signal lumineux, il est également nécessaire de positionner l'extrémité d'une fibre optique en vis-à-vis de la sortie optique correspondante. Plus généralement, pour tester un circuit, plusieurs extrémités de fibres optiques peuvent être mises en vis-à-vis de plusieurs entrées et/ou sorties optiques du circuit.

L'augmentation du nombre d'entrées et de sorties optiques du circuit à tester entraîne une augmentation du nombre d'étapes de mise en vis-à-vis d'extrémités de fibres optiques avec ces entrées et sorties optiques. Il en résulte une augmentation de la durée de test du circuit ce qui n'est pas souhaitable.

Pour pallier cette augmentation de la durée de test, plusieurs extrémités de fibres optiques sont simultanément mises en vis-à-vis de plusieurs extrémités de guides d'onde d'un circuit optique intégré. Pour cela, on utilise un faisceau de fibres optiques parallèles dont les extrémités appartiennent toutes à un même plan dans lequel elles forment un réseau. Le faisceau de fibres optiques est disposé dans un dispositif de maintien comprenant un repère pour orienter le dispositif de maintien, donc le faisceau de fibres. Par exemple, on utilise un faisceau de fibres optiques organisées en barrette dans un bloc de verre, les extrémités des fibres affleurant au niveau d'une face inférieure du bloc de verre. Selon un autre exemple, on utilise un faisceau de fibres disposé dans une férule, les fibres étant régulièrement réparties autour d'une fibre centrale, partageant une même gaine, et ayant leurs extrémités affleurant au niveau d'une face transverse de cette gaine. En outre, au niveau de la face supérieure de la tranche semiconductrice, des extrémités correspondantes de guides d'onde du circuit forment un réseau identique à celui des extrémités des fibres, cette disposition en réseau des extrémités de guides d'onde étant prévue lors de la conception du circuit à tester. Lors d'une phase de test, le faisceau de fibres est disposé au-dessus de la face supérieure de la tranche semiconductrice de sorte que les extrémités des fibres soient en regard de cette face supérieure. Le faisceau de fibres et/ou la tranche sont ensuite déplacés l'un par rapport à l'autre pour mettre le réseau des extrémités de fibres optiques en vis-à-vis du réseau des extrémités de guides d'onde, chaque extrémité de fibre optique étant alors en vis-à-vis d'une extrémité correspondante de guide d'onde.

Cependant, en vue de dessus, il n'est pas possible de visualiser les extrémités des fibres. En outre, lors de l'étape d'alignement, le dispositif de maintien peut venir masquer les extrémités des guides d'onde. Cela pose problème pour mettre les extrémités des fibres en vis-à-vis des extrémités des guides d'onde.

Une solution usuelle consiste à déterminer précisément les positions des extrémités des fibres par rapport au repère du dispositif de maintien du faisceau de fibres, à positionner ce repère par rapport au réseau des extrémités de guides d'onde, puis à déplacer le dispositif de maintien en se basant sur la position du repère par rapport aux extrémités de guides d'onde, et sur la position des extrémités des fibres par rapport à ce repère. Toutefois, une étape d'étalonnage nécessitant un équipement spécifique tel qu'un microscope précis et étalonné est alors requise pour déterminer la position des extrémités des fibres par rapport à ce repère.

Il serait donc souhaitable de disposer d'une méthode, plus simple et moins longue à mettre en œuvre que les méthodes existantes, pour mettre des extrémités de fibres en vis-à-vis d'extrémités de guides d'onde d'une tranche semiconductrice. Il serait également souhaitable de disposer d'une station de test mettant en œuvre automatiquement au moins certaines étapes de cette méthode d'alignement.

Le document US 2005/0220437 décrit un procédé d'alignement d'axes optiques. Le document US 6,618,514 décrit un procédé pour des circuits optiques plans. Le document GB 2,374,156 décrit l'alignement d'un réseau de fibres optiques avec des guides d'onde d'un dispositif optique.

### Résumé

L'invention prévoit un procédé de mise en vis-à-vis d'un réseau d'extrémités coplanaires de fibres optiques d'un faisceau de fibres parallèles avec un réseau correspondant d'extrémités de guides d'onde, comme définit par la revendication 1.

Selon un mode de réalisation, le point caractéristique correspond à ladite extrémité de guide d'onde, l'étape c) comprenant une étape c1) de déplacement de la tranche et du faisceau de fibres l'un par rapport à l'autre dans la deuxième direction jusqu'à ce que l'extrémité de la fibre soit en vis-à-vis dudit point.

Selon un mode de réalisation, le point caractéristique correspond à une extrémité d'un guide d'onde auxiliaire et la position du point caractéristique par rapport à ladite extrémité de guide d'onde est connue, l'étape c) comprenant successivement : une étape c1) de déplacement de la tranche et du faisceau de fibres l'un par rapport à l'autre dans la deuxième direction jusqu'à ce que l'extrémité de la fibre soit au-dessus du point caractéristique ; et une étape c2) de déplacement de la tranche et le faisceau de fibres l'un par rapport à l'autre en se basant sur la position connue du point par rapport à ladite extrémité de guide d'onde.

Selon un mode de réalisation, à l'étape c1), le déplacement est arrêté quand la quantité de lumière reçue au niveau du point caractéristique est maximale.

Selon un mode de réalisation, la tranche comprend un vernier gradué dans la deuxième direction, le procédé comprenant en outre : à la fin de l'étape c1), repérer la position du faisceau de fibres sur le vernier ; et lors d'un alignement ultérieur desdites extrémités des fibres sur lesdites extrémités de guides d'onde, effectuer les étapes a) et b), puis une étape de déplacement de la tranche et du dispositif de maintien l'un par rapport à l'autre dans la deuxième direction jusqu'à la position repérée.

Selon un mode de réalisation, à l'étape c), un faisceau lumineux d'une longueur d'onde adaptée à la fibre est injecté dans la fibre.

Selon un mode de réalisation, les fibres et les guides d'onde sont adaptés à transmettre un signal lumineux d'une longueur d'onde comprise entre 1,3 et 1,5 µm.

Selon un mode de réalisation, à l'étape b), la longueur d'onde du faisceau est comprise entre 600 et 780 nm.

Selon un mode de réalisation, les fibres partagent une même gaine.

Selon un mode de réalisation, les fibres sont organisées en barrette.

Selon un mode de réalisation, le faisceau de fibres est disposé dans un dispositif de maintien comprenant un repère d'orientation, l'étape a) comprenant l'alignement du repère d'orientation avec la première direction.

À l'étape a), le plan des extrémités des fibres optiques peut-être rendu sensiblement parallèle aux première et deuxième directions.

Un autre mode de réalisation prévoit une station de test adaptée à mettre en oeuvre le procédé ci-dessus.

Selon un mode de réalisation, l'étape b) est mise en œuvre de manière automatisée dans la station de test.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue schématique en perspective d'une station de test adaptée à mettre en œuvre un procédé de mise en vis-à-vis d'extrémités de fibres optiques d'un faisceau avec des extrémités de guides d'onde ;
les figures 2A et 2B sont des vues schématiques d'un exemple de faisceau de fibres dans le cas où les extrémités des fibres sont alignées ;
les figures 3A à 3C sont des vues schématiques illustrant des étapes successives d'un mode de réalisation d'un procédé de mise en vis-à-vis des extrémités alignées des fibres du faisceau des figures 2A et 2B avec des extrémités alignées de guides d'onde ;
les figures 4 à 6 illustrent des variantes de réalisation du procédé des figures 3A à 3C ;
les figures 7A et 7B sont des vues schématiques d'un autre exemple de faisceau de fibres dans le cas où les extrémités des fibres sont régulièrement réparties autour d'une extrémité d'une fibre centrale ; et
les figures 8A à 8C sont des vues schématiques illustrant des étapes successives d'un mode de réalisation d'un procédé de mise en vis-à-vis des extrémités des fibres du faisceau des figures 7A et 7B avec des extrémités de guides d'onde.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Dans la description qui suit, les termes "dessus", "dessous", "supérieur", "inférieur", etc., se réfèrent à la représentation des éléments concernés dans les figures correspondantes. Sauf précision contraire, le terme "environ" et l'expression "de l'ordre de" signifient à 10 % près, de préférence à 5 % près.

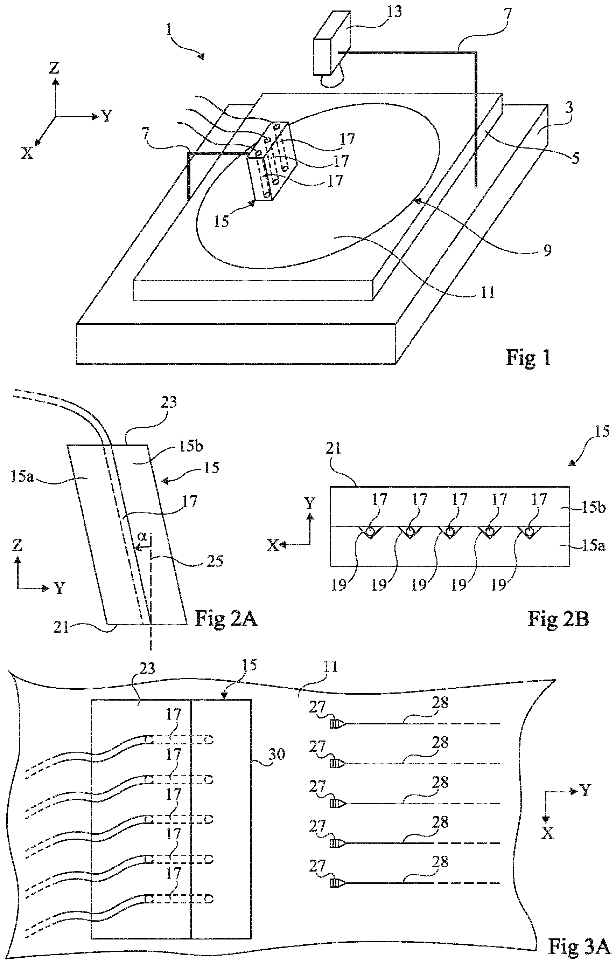

La figure 1 est une vue en perspective schématique d'une station de test adaptée à la mise en œuvre d'un procédé de mise en vis-à-vis d'un réseau d'extrémités de fibres optiques élémentaires avec un réseau correspondant d'extrémités de guides d'onde d'une tranche semiconductrice. Dans l'exemple décrit ci-après, chaque fibre élémentaire comprend un cœur muni de sa propre gaine.

La station de test 1 comprend, dans un repère orthogonal défini par trois directions ou axes X, Y et Z, un bâti 3 sur lequel repose une table mobile 5 dont la face supérieure est parallèle au plan défini par les directions X et Y. La station de test 1 comprend en outre des bras 7 solidaires du bâti 3 et destinés à porter divers éléments utiles au test d'un circuit optique intégré d'une tranche semiconductrice.

Lors d'une phase de test, une tranche semiconductrice 9 comprenant des circuits optiques intégrés à tester est placée sur la face supérieure de la table 5. Les extrémités (non représentées) des guides d'onde des circuits optiques intégrés à tester sont du côté de la face supérieure 11 de la tranche 9. Un dispositif d'acquisition d'images 13, par exemple une caméra éventuellement associée à un microscope, est monté à l'extrémité d'un bras 7, au-dessus de la tranche semiconductrice 9, de façon à obtenir des images de la face supérieure 11 de la tranche 9. Le dispositif 13 est par exemple adapté à de la lumière visible dont la longueur d'onde est comprise entre 380 et 780 nm environ. Dans cet exemple, un bloc de verre 15 parallélépipédique dans lequel est disposé un faisceau de fibres optiques élémentaires 17 organisées en barrette est monté à l'extrémité d'un autre bras 7. Les fibres élémentaires sont parallèles les unes aux autres et reparties selon un pas régulier. L'extrémité du bras 7 portant le bloc 15 et/ou la table 5 portant la tranche semiconductrice 9 comprennent des moyens pour déplacer l'extrémité du bras 7 et la table 5 l'une par rapport à l'autre dans les directions X et Y.

Les figures 2A et 2B sont des vues schématiques respectivement de côté et de dessous du bloc en verre 15.

Dans cet exemple, le bloc 15 est constitué de deux plaques en verre 15a et 15b collées l'une à l'autre. La plaque 15a comprend des rainures 19 au niveau de sa face collée à la plaque 15b, par exemple des rainures en forme de V. Dans chaque rainure 19 est disposée une des fibres élémentaires 17 de la barrette. Dans cet exemple, la barrette comprend cinq fibres élémentaires 17 étant entendu qu'une barrette peut comprendre un nombre quelconque de fibres élémentaires supérieur ou égal à deux. Les extrémités des fibres élémentaires 17 sont alignées et coplanaires au niveau de la face inférieure 21 du bloc 15. Au niveau de la face supérieure 23 du bloc 15, les fibres élémentaires 17 se prolongent de manière à être connectées, par exemple à des sources de faisceaux lumineux ou à des dispositifs d'acquisition de signaux lumineux. On considère ici que ces prolongements des fibres optiques élémentaires 17 ne font pas partie de la barrette. Par ailleurs, afin d'optimiser le couplage des fibres avec les réseaux de couplage des extrémités de guides d'onde, l'angle α entre la normale 25 à la face inférieure 21 du bloc 15 et l'axe de chaque fibre 17 de la barrette est non nul. Cet angle est choisi en fonction des réseaux de couplage utilisés, et est par exemple compris entre 3 et 15°, par exemple 8°. On notera que, dans le cas où les fibres élémentaires 17 sont à maintien de polarisation, leur orientation dans le bloc 15 est avantageusement choisie en fonction des réseaux de couplage utilisés qui peuvent être sensibles à la polarisation de la lumière.

A titre d'exemple, le cœur d'une fibre élémentaire 17 adaptée à transmettre de la lumière à une longueur d'onde comprise entre 1,3 et 1,5 µm (proche infra-rouge) a un diamètre d'environ 7 µm. Lorsqu'un signal lumineux de longueur d'onde inférieure à la longueur d'onde de coupure de la fibre élémentaire est injecté dans la fibre, de la lumière diffuse ou s'échappe à partir de ses parois. Cette longueur d'onde de coupure dépend de la fibre élémentaire utilisée et correspond à la longueur d'onde en dessous de laquelle la fibre n'est plus monomode. Un exemple de fibre adaptée à l'infra-rouge est la fibre désignée par l'appellation SMF28, et cette fibre a une longueur d'onde de coupure de 1260 nm. Pour un bloc 15 muni de huit fibres élémentaires adaptées au proche infra-rouge et réparties à un pas qui selon les normes actuelles est couramment de 127 ou 250 µm, la face inférieure 21 du bloc 15 a par exemple une largeur d'environ 2 mm pour une longueur d'environ 4,5 mm.

Les figures 3A à 3C sont des vues de dessus schématiques représentant le bloc 15 disposé au-dessus de la tranche semiconductrice 9, ces vues correspondant par exemple à des images obtenues par l'intermédiaire du dispositif d'acquisition d'images 13 de la figure 1. Ces figures illustrent des étapes successives d'un mode de réalisation d'un procédé de mise en vis-à-vis des extrémités alignées des fibres élémentaires 17 avec des extrémités alignées de guides d'onde.

La figure 3A illustre une étape préliminaire du procédé. A cette étape, la tranche 9 est disposée sur la table 5 de façon que sa face supérieure 11 soit sensiblement parallèle au plan défini par les directions X et Y. La tranche semiconductrice 9 est également disposée de sorte que l'orientation de l'alignement des extrémités 27 de guides d'onde 28 soit connue, par exemple de sorte que les réseaux de couplage 27 constituant les extrémités alignées de guides d'onde 28 soient alignés parallèlement à la direction X. Pour cela, la tranche 9 peut comprendre un repère, par exemple un méplat sur son bord périphérique. Le bloc 15 muni de la barrette de fibres optiques élémentaires 17 est disposé de façon que sa face inférieure 21 soit en vis-à-vis de la surface supérieure 11 de la tranche 9, et sensiblement parallèle à celle-ci. Le plan des extrémités de fibres élémentaires 17 est alors sensiblement parallèle à la tranche semiconductrice 9 et les axes des fibres élémentaires 17 sont inclinés par rapport à la direction Z. En outre, le bloc 15 est disposé de sorte que l'orientation de l'alignement des extrémités des fibres élémentaires 17 soit identique à celle de l'alignement des extrémités 27 de guides d'onde 28, c'est-à-dire que l'alignement des extrémités des fibres élémentaires 17 soit parallèle à la direction X dans cet exemple. Cela est par exemple réalisé en modifiant l'orientation du bloc 15 pour rendre un grand bord 30 de sa surface inférieure 21 parallèle à la direction X, ce bord 30 étant visible en vue de dessus, parallèle à l'alignement des extrémités des fibres élémentaires 17 et servant de repère d'orientation du bloc 15. La projection de l'axe de chacune de ces fibres élémentaires 17 sur la tranche semiconductrice 9 est alors parallèle à la direction Y. La mise en œuvre de ces étapes préliminaires d'orientation de la tranche 9 et du bloc 15 de fibres élémentaires 17 est à la portée de l'homme du métier.

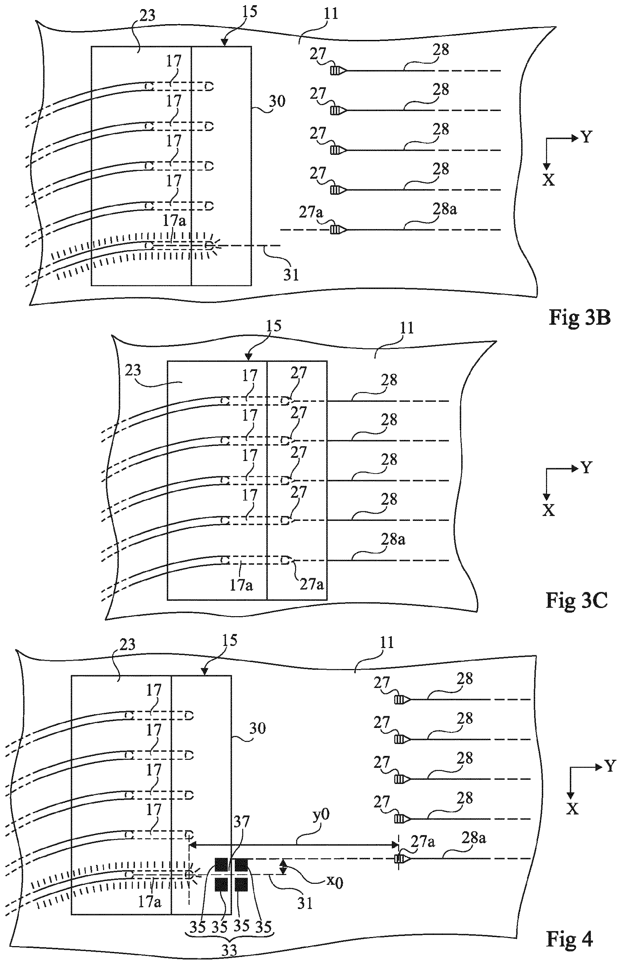

En figure 3B, à une étape suivante, un faisceau lumineux est injecté dans une, 17a, des fibres élémentaires 17 de la barrette. La longueur d'onde de la lumière injectée, de préférence sous la forme d'un faisceau laser, est choisie en dehors de la plage de longueurs d'onde pour lesquelles les fibres élémentaires 17 sont prévues, par exemple inférieure à la longueur d'onde de coupure de la fibre élémentaire, d'où il résulte que cette lumière diffuse à partir des parois de la fibre élémentaire 17a. La longueur d'onde de la lumière injectée est choisie pour obtenir une puissance de lumière diffusée à partir des parois de la fibre élémentaire 17a qui soit supérieure à 1 µW par centimètre de fibre, de préférence supérieure à 3 µW par centimètre de fibre. Cette longueur d'onde est en outre choisie pour que le bloc 15 soit au moins en partie transparent à cette longueur d'onde de sorte que l'on distingue la fibre élémentaire 17a à travers le bloc 15. On peut alors repérer l'axe 31 de la fibre élémentaire 17a. De préférence, la longueur d'onde de la lumière injectée est adaptée au dispositif d'acquisition d'images 13. De cette façon, la lumière diffusée par la fibre élémentaire 17a est visible sur les images fournies par le dispositif 13 et l'axe 31 de la fibre élémentaire 17a peut être repéré directement sur ces images.

A titre d'exemple, pour un dispositif d'acquisition 13 adapté à de la lumière visible, et pour des fibres élémentaires 17 et un circuit à tester adaptés à de la lumière dans le proche infra-rouge, la lumière injectée dans la fibre élémentaire 17a peut avoir une longueur d'onde comprise entre 600 et 780 nm, par exemple 630 nm. Selon un exemple plus particulier, les fibres sont des fibres SMF28 et la source de signal lumineux fournit un signal laser à une longueur d'onde de 780 à 785 nm environ, et à une puissance de 10 mW, d'où il résulte qu'une puissance lumineuse d'environ 4 µW est diffusée par centimètre de fibre.

La tranche semiconductrice 9 et le bloc 15 sont ensuite déplacés l'un par rapport à l'autre, dans la direction X, jusqu'à ce que l'extrémité 27 d'un guide d'onde 28, référencés ci-après 27a et 28a respectivement, soit dans le prolongement de la projection de l'axe 31 de la fibre élémentaire 17a sur la face supérieure 11 de la tranche semiconductrice 9. Lors de ce déplacement, quand la longueur d'onde de la lumière injectée est adaptée au dispositif d'acquisition d'images 13, la position de l'axe 31 de la fibre élémentaire 17a par rapport à l'extrémité 27a du guide d'onde 28a peut être visualisée sur les images fournies par le dispositif 13. Une fois ce déplacement selon la direction X terminé, la source fournissant le faisceau lumineux à la fibre élémentaire 17a peut être éteinte.

En figure 3C, à une étape suivante, la tranche semiconductrice 9 et le bloc 15 ont été déplacés l'un par rapport à l'autre, dans la direction Y, jusqu'à ce que l'extrémité de la fibre élémentaire 17a soit en vis-à-vis de l'extrémité 27a du guide d'onde 28a. Lorsque l'extrémité 27a du guide d'onde 28a est une entrée optique du circuit à tester, cela peut être effectué de la manière suivante. Un signal lumineux à la longueur d'onde de fonctionnement du circuit et des fibres élémentaires 17 est injecté dans la fibre élémentaire 17a, de préférence sous la forme d'un faisceau laser. Lors du déplacement de la tranche 9 et du bloc 15 l'un par rapport à l'autre dans la direction Y, au moment où l'extrémité de la fibre élémentaire 17a vient en vis-à-vis de l'extrémité 27a du guide d'onde 28a, ce signal lumineux est transmis au circuit. Cela est détecté en observant la valeur d'un signal de sortie correspondant qui atteint alors une valeur maximale. Lorsque le signal de sortie observé est un signal lumineux, son observation est par exemple effectuée par l'intermédiaire d'une fibre optique élémentaire supplémentaire dont une extrémité est disposée en vis-à-vis de la sortie optique correspondante et dont l'autre extrémité est couplée à un photo-détecteur.

Une fois l'extrémité de la fibre élémentaire 17a mise en vis-à-vis de l'extrémité 27a du guide d'onde 28a, du fait des étapes préliminaires d'orientation décrites en relation avec la figure 3A, chacune des extrémités des fibres optiques élémentaires 17 est en vis-à-vis d'une extrémité 27 correspondante de guide d'onde 28. On peut alors réaliser, comme cela a été décrit précédemment pour une seule fibre et un seul guide d'onde, un réglage fin en déplaçant le bloc 15 et la tranche 9 l'un par rapport à l'autre de façon à maximiser la valeur d'un signal de sortie correspondant. La phase de test peut ensuite débuter.

La figure 4 est une vue similaire à celle des figures 3A à 3C et illustre une variante de réalisation du procédé décrit ci-dessus.

Dans cette variante, un repère 33 est présent sur la surface supérieure 11 de la tranche semiconductrice 9. La distance x0 dans la direction X entre le repère 33 et l'extrémité 27a du guide d'onde 28a est connue. Dans cet exemple, le repère 33 est constitué de quatre carrés 35 disposés de façon à définir une croix 37 dont un bras est parallèle à la direction X et dont l'autre bras est parallèle à la direction Y. Après avoir effectué les étapes décrites en relation avec la figure 3A, l'axe 31 de la fibre élémentaire 17a est repéré de la façon décrite en relation avec la figure 3B. Le bloc 15 et la table 5 sont déplacés l'un par rapport à l'autre dans la direction X pour aligner le repère 33, dans cet exemple le bras du repère 33 parallèle à la direction Y, dans le prolongement de la projection de l'axe 31 de la fibre élémentaire 17a sur la tranche semiconductrice 9. Le bloc 15 et la tranche 9 sont alors déplacés l'un par rapport à l'autre dans la direction Y jusqu'à ce que le bord 30 du bloc 15 soit au-dessus du repère 33, c'est-à-dire au-dessus du bras du repère 33 parallèle à la direction X dans cet exemple. La figure 4 représente la position du bloc 15 au-dessus de la tranche 9 après ces étapes. Le bloc 15 et la tranche semiconductrice 9 sont ensuite déplacés l'un par rapport à l'autre dans la direction X de la distance connue x0, l'extrémité 27a du guide d'onde 28a se retrouvant alors alignée dans le prolongement de la projection de l'axe 31 sur la tranche semiconductrice 9. La tranche 9 et le bloc 15 sont alors déplacés l'un par rapport à l'autre dans la direction Y de la façon décrite en relation avec la figure 3C, jusqu'à ce que l'extrémité de la fibre élémentaire 17a soit en vis-à-vis de l'extrémité 27a du guide d'onde 28a.

De préférence, la distance y0 du dernier déplacement en Y est mémorisée de sorte que, lors d'une mise en œuvre ultérieure du procédé, après que le bloc 15 ait été aligné sur le repère 33 comme représenté en figure 4, il suffit de déplacer le bloc 15 et la tranche 9 l'un par rapport à l'autre de la distance connue x0 dans la direction X et de la distance mémorisée y0 dans la direction Y pour mettre en vis-à-vis les extrémités des fibres élémentaires 17 avec les extrémités 27 des guides d'onde 28. Il en résulte un gain de temps lors de cette mise en œuvre ultérieure du procédé.

De manière avantageuse, l'alignement du repère 33 dans le prolongement de la projection de l'axe 31 sur la face supérieure 11 de la tranche semiconductrice 9 est généralement plus précis que l'alignement de l'extrémité 27a dans ce prolongement.

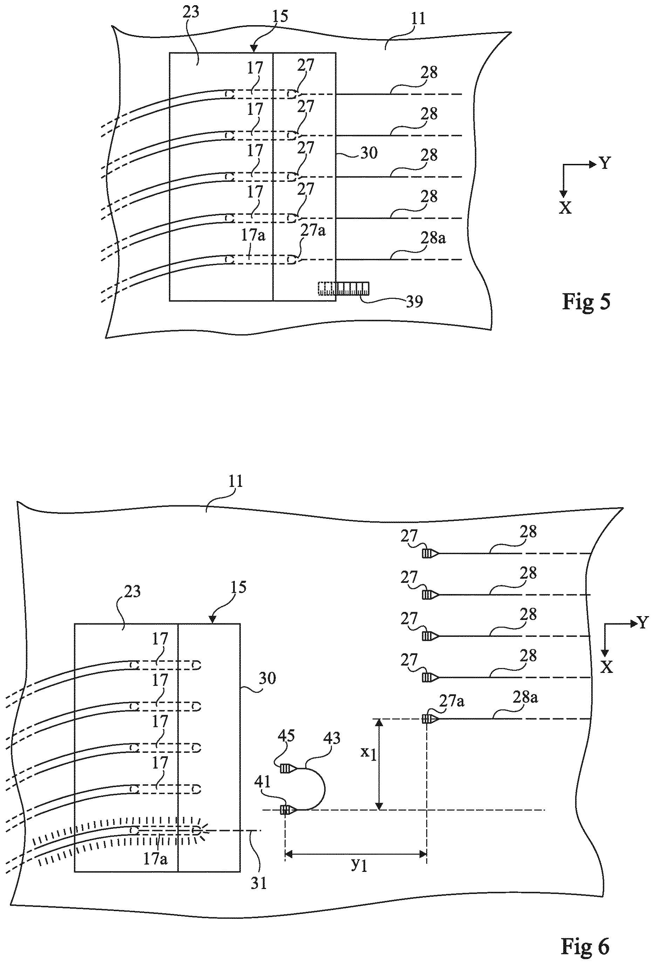

La figure 5 est une vue similaire à celle de la figure 3C et illustre une autre variante de réalisation du procédé décrit ci-dessus.

Dans cette variante, un vernier 39 gradué dans la direction Y est présent sur la surface supérieure 11 de la tranche semiconductrice 9. Le procédé décrit en relation avec les figures 3A à 3C est mis en œuvre une première fois. Une fois l'étape de la figure 3C terminée, on repère la position du bord 30 du bloc 15, donc du faisceau de fibres élémentaires 17, sur le vernier 39. Ainsi, lors d'une mise en œuvre ultérieure du procédé d'alignement, l'étape de la figure 3C est remplacée par une étape consistant à déplacer la tranche semiconductrice 9 et le bloc 15 l'un par rapport à l'autre dans la direction Y jusqu'à ce que le bord 30 soit à la position précédemment repérée. Il en résulte un gain de temps pour la mise en œuvre ultérieure du procédé.

Dans le procédé et ses variantes décrits ci-dessus, l'extrémité 27a du guide d'onde 28a constitue un point caractéristique de la face supérieure 11 de la tranche semiconductrice 9 et l'extrémité de la fibre élémentaire 17a est directement mise en vis-à-vis de cette extrémité 27a du guide d'onde 28a, éventuellement en utilisant un repère 33. Dans une autre variante, l'extrémité de la fibre élémentaire 17a est d'abord mise en vis-à-vis d'un point caractéristique intermédiaire, distinct de l'extrémité 27a du guide d'onde 28a, avant d'être mise en vis-à-vis de cette extrémité 27a.

La figure 6 est une vue similaire à celle de la figure 3B et illustre cette autre variante de réalisation.

Dans cette variante, le point caractéristique 41 de la face supérieure 11 de la tranche semiconductrice 9 correspond à une extrémité 41 d'un guide d'onde auxiliaire 43. La distance x1 dans la direction X et la distance y1 dans la direction Y qui séparent ce point caractéristique 41 de l'extrémité 27a du guide 28a sont connues. Dans l'exemple représenté ici, l'autre extrémité 45 du guide d'onde 43 est alignée avec le point caractéristique 41, parallèlement à la direction X, et les extrémités 41 et 45 du guide d'onde 43 sont séparées l'une de l'autre d'une distance correspondant à celle séparant deux fibres élémentaires 17 de la barrette.

Les étapes d'orientation décrites en relation avec la figure 3A sont effectuées. Les étapes décrites en relation avec les figures 3B et 3C sont ensuite effectuées à la différence que l'extrémité de la fibre élémentaire 17a est d'abord mise en vis-à-vis du point caractéristique 41 et non pas de l'extrémité 27a du guide d'onde 28a. De manière avantageuse, dans cet exemple, lorsque l'extrémité de la fibre élémentaire 17a est en vis-à-vis du point 41, une autre fibre optique élémentaire 17 de la barrette a son extrémité en vis-à-vis de l'extrémité 45 du guide d'onde 43. Il en résulte que le moment où l'intensité du signal lumineux reçu par l'intermédiaire de cette autre fibre élémentaire 17 est maximale correspond au moment où l'extrémité de la fibre élémentaire 17a est en vis-à-vis du point 41. La tranche semiconductrice 9 et le bloc 15 sont ensuite déplacés l'un par rapport à l'autre de la distance x1 dans la direction X et de la distance y1 dans la direction Y pour mettre l'extrémité de la fibre élémentaire 17a en vis-à-vis de l'extrémité 27a du guide d'onde 28a.

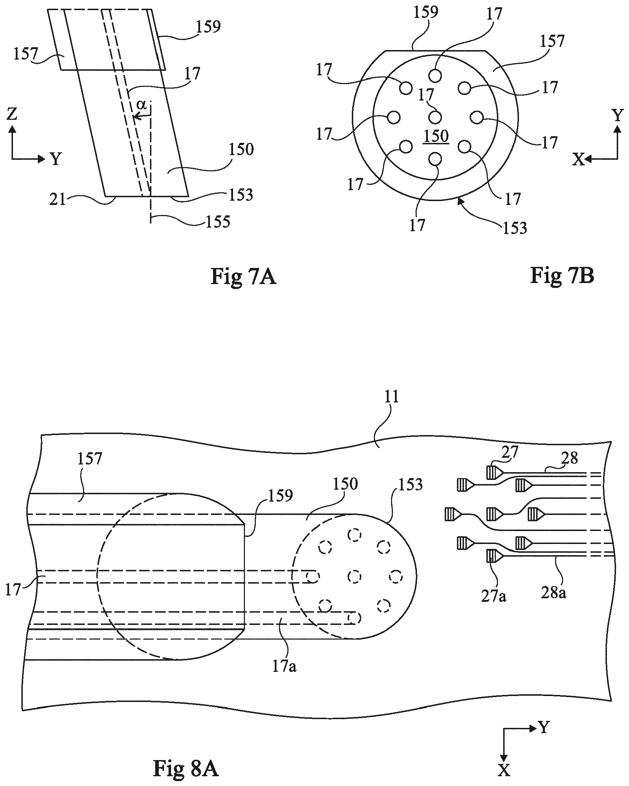

Les figures 7A et 7B représentent schématiquement un autre exemple de faisceau de fibres élémentaires 17 dans le cas où les fibres élémentaires partagent une même gaine 150, par exemple en verre, et sont régulièrement réparties autour d'une fibre élémentaire centrale. La figure 7A est une vue de côté du faisceau, une seule fibre élémentaire 17 étant représentée en pointillé en figure 7A, et la figure 7B est une vue de dessous d'une face de sortie 153 de la gaine 150 au niveau de laquelle affleurent les extrémités des fibres élémentaires 17. Comme précédemment, les fibres élémentaires 17 sont parallèles entre elles, leurs extrémités sont coplanaires au niveau de la face 153, et les axes des fibres élémentaires 17 sont inclinés d'un angle α par rapport à la normale 155 à cette face 153. Dans cet exemple, le dispositif de maintien dans lequel est disposée la gaine 150 est une férule métallique 157, l'extrémité de la gaine 150 dépassant hors de cette férule métallique 157. La férule métallique 157 comprend un repère d'orientation, dans cet exemple un méplat 159, de manière à pouvoir orienter le faisceau de fibres élémentaires 17.

Les figures 8A à 8C sont des vues de dessus schématiques représentant le faisceau de fibres élémentaires 17 lorsque que la férule métallique 157 est montée à la place du bloc 15 dans la station de test 1. Ces figures illustrent des étapes successives du procédé de mise en vis-à-vis des extrémités des fibres élémentaires 17 avec les extrémités 27 des guides d'onde 28 et correspondent par exemple à des images obtenues par l'intermédiaire du dispositif d'acquisition d'images 13 de la figure 1. Dans ces figures, deux fibres élémentaires 17 seulement sont représentées en pointillé.

La figure 8A illustre les étapes préliminaires d'orientation décrites en relation avec la figure 3A, appliquées au faisceau de fibres élémentaires 17 des figures 7A et 7B.

La férule métallique 157 est disposée de façon que les extrémités des fibres élémentaires 17 soient en regard de la face supérieure 11 de la tranche semiconductrice 9, la face supérieure 11 de la tranche 9 étant sensiblement parallèle à la face 153 de la gaine 150, donc au plan des extrémités des fibres élémentaires 17. Au niveau de la face supérieure 11 de la tranche 9, les extrémités 27 des guides d'onde 28 forment un réseau identique au réseau des extrémités des fibres élémentaires 17 au niveau de la face 153 de la gaine 150. La tranche semiconductrice 9 et la férule 157 sont disposées de sorte que le réseau des extrémités 27 des guides d'onde 28 soit orienté de la même façon que le réseau des extrémités des fibres élémentaires 17, et que la projection de l'axe de chacune des fibres élémentaires 17 sur la tranche semiconductrice 9 soit parallèle à la direction Y. Par exemple, le méplat 159 de la férule métallique 157 est rendu parallèle à la direction X, et la tranche 9 est orientée en conséquence comme cela est représenté en figure 8A.

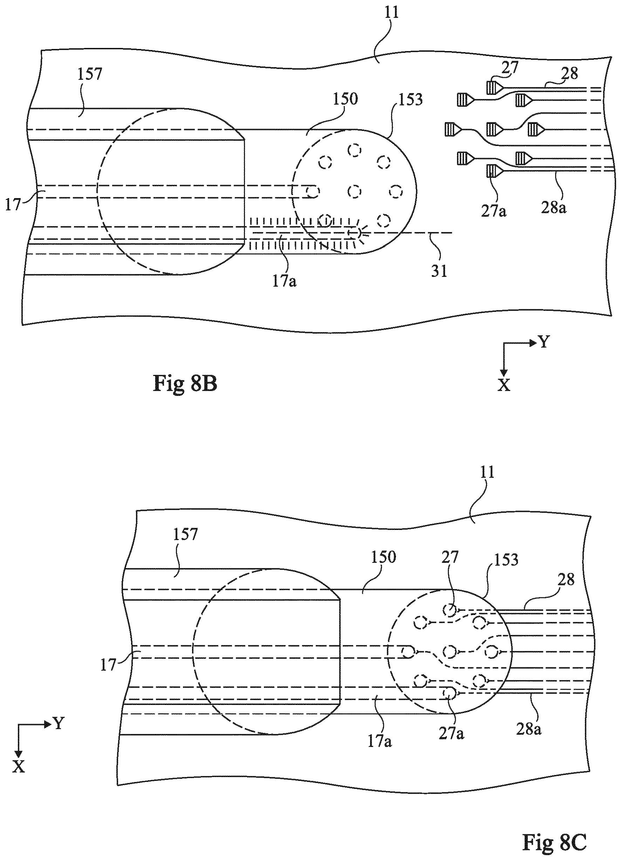

En figure 8B, à une étape suivante correspondant à l'étape de la figure 3B, un faisceau lumineux est injecté dans une fibre élémentaire 17a de sorte que de la lumière diffuse à partir de ses parois, et l'axe 31 de la fibre élémentaire 17a est repéré au niveau de la portion de la gaine 150 dépassant hors de la férule 157. La tranche semiconductrice 9 et le faisceau de fibres élémentaires 17 sont ensuite déplacés l'un par rapport à l'autre, dans la direction X, jusqu'à ce que l'extrémité 27a d'un guide d'onde 28a soit dans le prolongement de la projection de l'axe 31 sur la face supérieure 11 de la tranche semiconductrice 9. La position de l'extrémité 27a du guide d'onde 28a dans le réseau des extrémités 27 des guides d'onde 28 correspond à celle de l'extrémité de la fibre 17a dans le réseau des extrémités des fibres élémentaires 17.

En figure 8C, à une étape suivante correspondant à l'étape de la figure 3C, la tranche semiconductrice 9 et le faisceau de fibres élémentaires 17 ont été déplacés l'un par rapport à l'autre, dans la direction Y pour mettre l'extrémité de la fibre élémentaire 17a en vis-à-vis de l'extrémité 27a du guide d'onde 28a. Après ces étapes et une éventuelle étape de réglage fin, chacune des extrémités des fibres élémentaires 17 est en vis-à-vis d'une extrémité 27 correspondante de guide d'onde.

Des étapes décrites en relation avec les figures 3A à 3C, 4 à 6 et 8A à 8C peuvent être mises en œuvre de manière automatique par la station de test 1 représentée en figure 1.

Dans ce cas, le bras 7 adapté à porter le dispositif de maintien 15 ou 157 du faisceau de fibres élémentaires 17 et/ou la table 5 adaptée à porter la tranche semiconductrice 9 comprennent des dispositifs de déplacement (non représentés), par exemple des moteurs pas à pas ou des vérins, pour déplacer l'extrémité du bras 7 et la table 5 l'une par rapport à l'autre dans les directions X et Y.

La station de test 1 comprend en outre un dispositif de traitement d'images (non représenté). Ce dispositif de traitement d'images est adapté à repérer, grâce à la lumière diffusée par les parois de la fibre élémentaire 17a, l'axe 31 de cette fibre élémentaire 17a sur les images fournies par le dispositif d'acquisition d'images 13. Le dispositif de traitement d'images est également adapté à repérer la position d'un point caractéristique 41 ou 27a, et éventuellement du repère 33, sur ces images.

La station de test 1 comprend aussi un dispositif de calcul (non représenté) adapté à déterminer et fournir, à partir des diverses positions repérées et fournies par le dispositif de traitement d'images et éventuellement à partir de la connaissance des distances x0, y0, x1 et y1, des signaux de commande des dispositifs de déplacement de la table 5 et du bras 7 portant le dispositif de maintien 15 ou 157 du faisceau de fibres élémentaires 17.

Par ailleurs, la station de test 1 peut comprendre un dispositif d'acquisition et de traitement de signal (non représenté). Les signaux lumineux et/ou électriques acquis par ce dispositif sont traités pour repérer le moment où l'extrémité de la fibre élémentaire 17a est en vis-à-vis du point caractéristique 41 ou 27a. Le dispositif d'acquisition et de traitement de signal fournit, éventuellement par l'intermédiaire du dispositif de calcul, des signaux de commande des dispositifs de déplacement de la table 5 et du bras 7 portant le dispositif de maintien 15 ou 157 du faisceau de fibres élémentaires 17.

Le dispositif de calcul, le dispositif de traitement d'images, le dispositif d'acquisition d'images et, le cas échéant, le dispositif d'acquisition et de traitement de signal comportent chacun un circuit dédié ou un circuit comprenant un microprocesseur associé à une mémoire d'instructions dans laquelle sont stockées des instructions qui, lorsqu'elles sont lues par le microprocesseur, permettent la mise en œuvre des fonctions associées à ce dispositif. En variante, un microprocesseur et une mémoire d'instructions peuvent être partagés par le dispositif de calcul, le dispositif de traitement d'images et/ou le dispositif d'acquisition et de traitement de signal.

Ainsi, la station de test 1 permet la mise en œuvre automatique d'au moins certaines des étapes du procédé d'alignement décrit ci-dessus, en particulier l'étape consistant à aligner un point caractéristique 41 ou 27a de la tranche semiconductrice 9 dans le prolongement de la projection de l'axe 31 de la fibre élémentaire 17a sur la tranche semiconductrice 9.

Des modes de réalisation particuliers ont été décrits. Diverses variantes et modifications apparaîtront à l'homme de l'art. En particulier, le terme "circuit optique intégré" couvre les circuits intégrés ne comprenant que des composants optiques, les circuits intégrés optoélectroniques, et plus généralement les circuits intégrés comprenant au moins une partie optique intégrée reliée à au moins une entrée optique du circuit.

On a décrit deux exemples de faisceaux de fibres élémentaires 17 disposés dans des dispositifs de maintien 15 et 157 respectivement. Tout autre dispositif de maintien d'un faisceau de fibres élémentaires 17 peut être utilisé dès lors que :
le dispositif de maintien comprend un repère d'orientation pour orienter le réseau des extrémités des fibres optiques élémentaires du faisceau tel que cela a été décrit en relation avec les figures 3A et 8A, et
le dispositif comprend, pour repérer l'axe 31 de la fibre élémentaire 17a, une partie au moins partiellement transparente à la lumière diffusée par les parois de la fibre élémentaire 17a ou ne recouvre pas une portion de la fibre 17a au niveau de son extrémité.

En outre, d'autres faisceaux de fibres optiques élémentaires 17 conduisant à des réseaux d'extrémités coplanaires de fibres optiques élémentaires différents de ceux décrits précédemment peuvent être utilisés. On prévoit alors que, au niveau de la face supérieure 11 de la tranche semiconductrice 9, des extrémités 27 de guides d'onde 28 forment un réseau correspondant.

Pour mieux repérer l'axe 31 de la fibre élémentaire 17a, le dispositif d'acquisition d'images peut être orienté de sorte que son axe optique soit incliné par rapport à la direction Z, par exemple pour que cet axe optique soit sensiblement orthogonal à l'axe 31 de la fibre 17a.

L'homme du métier est en mesure d'utiliser, pour constituer un point caractéristique 41 de la tranche semiconductrice 9, d'autres dispositifs que celui décrit en relation avec la figure 6. Il est également en mesure de modifier la forme du repère 33 décrit en relation avec la figure 4.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, l'utilisation d'un repère 33 et/ou d'un vernier 39 peut être combinée avec l'utilisation d'un point caractéristique 41. En outre, les variantes de réalisation décrites en relation avec les figures 4, 5 et 6 dans le cas du faisceau de fibres élémentaires 17 en barrette disposées dans le bloc 15 s'appliquent également à d'autres faisceaux de fibres optiques élémentaires 17 dans d'autres dispositifs de maintien, par exemple au faisceau de fibres élémentaires 17 décrit en relation avec les figures 7A et 7B, disposé dans la férule métallique 157.

## Revendications

1. Procédé de mise en vis-à-vis d'un réseau d'extrémités coplanaires de fibres optiques (17, 17a) d'un faisceau de fibres parallèles et inclinées par rapport à la normale au plan des extrémités des fibres, avec un réseau correspondant d'extrémités (27, 27a) de guides d'onde (28, 28a) d'une tranche semiconductrice (9), le faisceau de fibres et la tranche étant déplaçables l'un par rapport à l'autre dans des première et deuxième directions orthogonales (X, Y), le procédé comprenant les étapes successives suivantes :
a) disposer la tranche de façon qu'une face supérieure de la tranche soit sensiblement parallèle à un plan défini par les première et deuxième directions, et disposer le faisceau de fibres au-dessus de la tranche (9) de sorte que les réseaux d'extrémités aient la même orientation par rapport aux première et deuxième directions et la projection de l'axe (31) de chacune des fibres (17, 17a) sur la tranche (9) soit parallèle à la deuxième direction (Y) ;
b) injecter, dans une (17a) des fibres (17), un faisceau lumineux d'une longueur d'onde telle que de la lumière diffuse à partir des parois latérales de la fibre (17a) avec une puissance supérieure à 1 µW, de préférence à 3 µW, par centimètre de fibre, repérer l'axe (31) de la fibre à partir de la lumière diffusée à partir des parois latérales de la fibre et déplacer le faisceau de fibres et la tranche (9) l'un par rapport à l'autre dans la première direction (X) pour aligner un point caractéristique (41, 27a) de la tranche (9) dans le prolongement de la projection de l'axe (31) de la fibre (17a) sur la tranche (9) ; et
c) déplacer le faisceau de fibres et la tranche (9) l'un par rapport à l'autre jusqu'à ce que l'extrémité de la fibre (17a) soit en vis-à-vis d'une extrémité (27a) de guide d'onde (28a) correspondante.

2. Procédé selon la revendication 1, dans lequel le point caractéristique (27a) correspond à ladite extrémité (27a) de guide d'onde (28a), l'étape c) comprenant une étape c1) de déplacement de la tranche (9) et du faisceau de fibres l'un par rapport à l'autre dans la deuxième direction (Y) jusqu'à ce que l'extrémité de la fibre (17a) soit en vis-à-vis dudit point (27a).

3. Procédé selon la revendication 1, dans lequel le point caractéristique (41) correspond à une extrémité d'un guide d'onde auxiliaire (43) et la position du point caractéristique (41) par rapport à ladite extrémité (27a) de guide d'onde (28a) est connue, l'étape c) comprenant successivement :
une étape c1) de déplacement de la tranche (9) et du faisceau de fibres l'un par rapport à l'autre dans la deuxième direction (Y) jusqu'à ce que l'extrémité de la fibre (17a) soit au-dessus du point caractéristique (41) ; et
une étape c2) de déplacement de la tranche (9) et le faisceau de fibres l'un par rapport à l'autre en se basant sur la position connue du point (41) par rapport à ladite extrémité (27a) de guide d'onde (28a).

4. Procédé selon la revendication 2 ou 3, dans lequel, à l'étape c1), le déplacement est arrêté quand la quantité de lumière reçue au niveau du point caractéristique (27a, 41) est maximale.

5. Procédé selon l'une quelconque des revendications 2 à 4, dans lequel la tranche (9) comprend un vernier (39) gradué dans la deuxième direction (Y), le procédé comprenant en outre :
à la fin de l'étape c1), repérer la position du faisceau de fibres sur le vernier (39) ; et
lors d'un alignement ultérieur desdites extrémités des fibres (17) sur lesdites extrémités (27) de guides d'onde (28), effectuer les étapes a) et b), puis une étape de déplacement de la tranche (9) et du faisceau de fibres l'un par rapport à l'autre dans la deuxième direction (Y) jusqu'à la position repérée.

6. Procédé selon l'une quelconque des revendications 1 à 5, dans lequel, à l'étape c), un faisceau lumineux d'une longueur d'onde adaptée à la fibre (17a) est injecté dans la fibre (17a).

7. Procédé selon l'une quelconque des revendications 1 à 6, dans lequel les fibres (17) et les guides d'onde (28) sont adaptés à transmettre un signal lumineux d'une longueur d'onde comprise entre 1,3 et 1,5 µm.

8. Procédé selon la revendication 7, dans lequel, à l'étape b), la longueur d'onde du faisceau est comprise entre 600 et 780 nm.

9. Procédé selon l'une quelconque des revendications 1 à 8, dans lequel les fibres (17) partagent une même gaine (150).

10. Procédé selon l'une quelconque des revendications 1 à 8, dans lequel les fibres (17) sont organisées en barrette.

11. Procédé selon l'une quelconque des revendications 1 à 10, dans lequel le faisceau de fibres est disposé dans un dispositif de maintien (15, 157) comprenant un repère d'orientation (30, 159), l'étape a) comprenant l'alignement du repère d'orientation avec la première direction (X).

12. Procédé selon l'une quelconque des revendications 1 à 11, dans lequel à l'étape a), le plan des extrémités des fibres optiques (17) est rendu parallèle aux première et deuxième directions.

13. Station de test (1) adaptée à mettre en oeuvre le procédé selon l'une quelconque des revendications 1 à 12, la station de test (1) comprenant :
un bras (7) adapté à porter le dispositif de maintien (15, 157) du faisceau de fibres (17) et une table (5) adaptée à porter une tranche semiconductrice (9),
le bras (7) et/ou la table (5) comprenant des dispositifs de déplacement pour déplacer l'extrémité du bras (7) et la table (5) l'une par rapport à l'autre dans des première et deuxième directions orthogonales (X, Y), et
un moyen adapté à injecter, dans une (17a) des fibres (17), un faisceau lumineux d'une longueur d'onde telle que de la lumière diffuse à partir des parois latérales de la fibre (17a) avec une puissance supérieure à 1 µW, de préférence à 3 µW, par centimètre de fibre.

14. Station de test selon la revendication 13, dans laquelle l'étape b) de la revendication 1 est mise en œuvre de manière automatisée.

## Patentansprüche

1. Verfahren zum Anordnen eines Netzwerks koplanarer Enden von Lichtwellenleitern bzw. optischen Fasern (17, 17a) eines Bündels paralleler Fasern, das bezüglich der Normalen zur Ebene der Faserenden geneigt ist, gegenüber einem entsprechenden Netzwerk von Enden (27, 27a) von Wellenleitern (28, 28a) eines Halbleiterwafers (9), wobei das Faserbündel und der Wafer in ersten und zweiten orthogonalen Richtungen (X, Y) zueinander versetzbar sind, wobei das Verfahren die folgenden aufeinanderfolgenden Schritte aufweist:
a) Anordnen des Wafers, so dass die Oberseite des Wafers im Wesentlichen parallel zu einer durch die erste und zweite Richtung definierten Ebene ist, und Anordnen des Faserbündels über dem Wafer (9), so dass die Endnetzwerke die gleiche Ausrichtung in Bezug auf die erste und zweite Richtung aufweisen und die Projektion der Achse (31) jeder der Fasern (17, 17a) auf dem Wafer (9) parallel zur zweiten Richtung (Y) ist;
b) Einführen in eine (17a) der Fasern (17) eines Lichtstrahls mit einer Wellenlänge so dass Licht von den Seitenwänden der Faser (17a) mit einer Leistung von mehr als 1 µW, vorzugsweise mehr als 3 µW, pro Faserzentimeter gestreut wird, Positionieren der Faserachse (31) basierend auf dem gestreuten Licht von den Seitenwänden der Faser, und Versetzen des Faserbündels und des Wafers (9) zueinander in die erste Richtung (X), um einen charakteristischen Punkt (41, 27a) des Wafers (9) mit einer Linie der Projektion der Achse (31) der Faser (17a) auf dem Wafer (9) auszurichten; und
c) Versetzen des Faserbündels und des Wafers (9) relativ zueinander, bis das Ende der Faser (17a) gegenüber einem entsprechenden Ende (27a) eines Wellenleiters (28a) angeordnet ist.

2. Verfahren nach Anspruch 1, wobei der charakteristische Punkt (27a) dem Ende (27a) eines Wellenleiters (28a) entspricht, wobei der Schritt c) einen Schritt c1) des Versetzens des Wafers (9) und des Faserbündels relativ zueinander in der zweiten Richtung (Y) aufweist, bis das Ende der Faser (17a) gegenüber dem Punkt (27a) angeordnet ist.

3. Verfahren nach Anspruch 1, wobei der charakteristische Punkt (41) einem Ende eines Hilfs-Wellenleiters (43) entspricht und die Position des charakteristischen Punktes (41) relativ zu dem Ende (27a) eines Wellenleiters (28a) bekannt und wobei Schritt c) nacheinander Folgendes aufweist:
einen Schritt c1) des Versetzens des Wafers (9) und des Faserbündels relativ zueinander in die zweite Richtung (Y), bis das Ende der Faser (17a) oberhalb des charakteristischen Punktes (41) liegt; und
einen Schritt c2) des Versetzens des Wafers (9) und des Faserbündels relativ zueinander basierend auf der bekannten Position des Punktes (41) relativ zu dem Ende (27a) eines Wellenleiters (28a).

4. Verfahren nach Anspruch 2 oder 3, wobei im Schritt c1) das Versetzen gestoppt wird, wenn die auf der Höhe des charakteristischen Punktes (27a, 41) empfangene Lichtmenge maximal ist.

5. Verfahren nach einem der Ansprüche 2 bis 4, wobei der Wafer (9) einen Mess-Nonius (39) in der zweiten Richtung (Y) aufweiwst, wobei das Verfahren ferner Folgendes saufweist:
am Ende von Schritt c1), Lokalisieren der Position des Faserbündels auf dem Nonius (39); und
während einer nachfolgenden Ausrichtung der Enden der Fasern (17) auf den Enden (27) der Wellenleiter (28), Ausführen der Schritte a) und b) und dann eines Schrittes des Versetzens des Wafers (9) und des Faserbündels relativ zueinander in der zweiten Richtung (Y) bis zur lokalisierten Position.

6. Verfahren nach einem der Ansprüche 1 bis 5, wobei im Schritt c) ein Lichtstrahl mit einer an die Faser (17a) angepassten Wellenlänge in die Faser (17a) eingeführt wird.

7. Verfahren nach einem der Ansprüche 1 bis 6, wobei die Fasern (17) und die Wellenleiter (28) in der Lage sind, ein Lichtsignal mit einer Wellenlänge im Bereich von 1,3 bis 1,5 µm zu übertragen.

8. Verfahren nach Anspruch 7, wobei im Schritt b) die Wellenlänge des Strahls im Bereich von 600 bis 780 nm liegt.

9. Verfahren nach einem der Ansprüche 1 bis 8, wobei die Fasern (17) eine gleiche Umhüllung (150) teilen.

10. Verfahren nach einem der Ansprüche 1 bis 8, wobei die Fasern (17) in einem Stab angeordnet sind.

11. Verfahren nach einem der Ansprüche 1 bis 10, wobei das Faserbündel in einer Haltevorrichtung (15, 157) angeordnet ist, die eine Orientierungsmarke (30, 159) aufweist, wobei der Schritt a) das Ausrichten der Orientierungsmarke mit der ersten Richtung (X) aufweist.

12. Verfahren nach einem der Ansprüche 1 bis 11, wobei im Schritt a) die Ebene der Enden der optischen Fasern (17) parallel zur ersten und zweiten Richtung ausgerichtet wird.

13. Prüfstation (1), die in der Lage ist, das Verfahren nach einem der Ansprüche 1 bis 12 durchzuführen, wobei die Prüfstation (1) Folgendes aufweist:
einen Arm (7), der die Haltevorrichtung (15, 157) des Faserbündels (17) tragen kann, und einen Tisch (5), der einen Halbleiterwafer (9) tragen kann,
der Arm (7) und/oder der Tisch (5) weisen Versatzvorrichtungen zum Versetzen des Endes des Arms (7) und des Tisches (5) relativ zueinander in einer ersten und zweiten orthogonalen Richtung (X, Y) auf, und
Mittel, die in der Lage sind, in eine (17a) der Fasern (17) einen Lichtstrahl mit einer Wellenlänge einzubringen, so dass Licht von den Seitenwänden der Faser (17a) mit einer Leistung von mehr als 1 µW, vorzugsweise mehr als 3 µW, pro Faserzentimeter gestreut wird.

14. Prüfstation nach Anspruch 13, wobei Schritt b) nach Anspruch 1 in automatischer Weist implementiert wird.

## Claims

1. A method of arranging a network of coplanar ends of optical fibers (17, 17a) of a bundle of parallel fibers inclined with respect to the normal to the plane of the fiber ends, opposite a corresponding network of ends (27, 27a) of waveguides (28, 28a) of a semiconductor wafer (9), the bundle of fibers and the wafer being displaceable with respect to each other in first and second orthogonal directions (X, Y), the method comprising the successive steps of:
a) arranging the wafer so that the upper surface of the wafer is substantially parallel to a plane defined by the first and second directions, and arranging the fiber bundle above the wafer (9) so that the end networks have the same orientation with respect to the first and second directions and the projection of the axis (31) of each of the fibers (17, 17a) on the wafer (9) is parallel to the second direction (Y);
b) injecting, into one (17a) of the fibers (17), a light beam having a wavelength such that light is scattered from the lateral walls of the fiber (17a) with a power greater than 1 µW, preferably greater than 3 µW, per fiber centimeter, locating the fiber axis (31) based on the scattered light from the lateral walls of the fiber, and displacing the fiber bundle and the wafer (9) with respect to each other in the first direction (X) to align a characteristic point (41, 27a) of the wafer (9) in line with the projection of the axis (31) of the fiber (17a) on the wafer (9); and
c) displacing the fiber bundle and the wafer (9) with respect to each other until the end of the fiber (17a) is located opposite a corresponding end (27a) of a waveguide (28a).

2. The method of claim 1, wherein the characteristic point (27a) corresponds to said end (27a) of a waveguide (28a), step c) comprising a step c1) of displacing the wafer (9) and the fiber bundle with respect to each other in the second direction (Y) until the end of the fiber (17a) is located opposite said point (27a).

3. The method of claim 1, wherein the characteristic point (41) corresponds to an end of an auxiliary waveguide (43) and the position of the characteristic point (41) relative to said end (27a) of a waveguide (28a) is known, step c) successively comprising:
a step c1) of displacing the wafer (9) and the fiber bundle with respect to each other in the second direction (Y) until the end of the fiber (17a) is located above the characteristic point (41); and
a step c2) of displacing the wafer (9) and the fiber bundle with respect to each other based on the known position of the point (41) relative to said end (27a) of a waveguide (28a).

4. The method of claim 2 or 3, wherein, at step c1), the displacement is stopped when the quantity of light received at the level of the characteristic point (27a, 41) is maximum.

5. The method of any of claims 2 to 4, wherein the wafer (9) comprises a graduated vernier (39) in the second direction (Y), the method further comprising:
at the end of step c1), locating the position of the fiber bundle on the vernier (39); and
during a subsequent alignment of said ends of the fibers (17) on said ends (27) of waveguides (28), carrying out steps a) and b) and then a step of displacing the wafer (9) and the fiber bundle with respect to each other in the second direction (Y) until the located position.

6. The method of any of claims 1 to 5, wherein, at step c), a light beam having a wavelength adapted to the fiber (17a) is injected into the fiber (17a).

7. The method of any of claims 1 to 6, wherein the fibers (17) and the waveguides (28) are capable of transmitting a light signal having a wavelength in the range from 1.3 to 1.5 µm.

8. The method of claim 7, wherein, at step b), the wavelength of the beam is in the range from 600 to 780 nm.

9. The method of any of claims 1 to 8, wherein the fibers (17) share a same cladding (150).

10. The method of any of claims 1 to 8, wherein the fibers (17) are organized in a bar.

11. The method of any of claims 1 to 10, wherein the fiber bundle is arranged in a holding device (15, 157) comprising an orientation marker (30, 159), step a) comprising aligning the orientation marker with the first direction (X).

12. The method of any of claims 1 to 11, wherein at step a), the plane of the ends of the optical fibers (17) is made parallel to the first and second directions.

13. A test station (1) capable of implementing the method of any of claims 1 to 12, the test station (1) comprising:
an arm (7) capable of supporting the holding device (15, 157) of the fiber bundle (17) and a table (5) capable of supporting a semiconductor wafer (9),
the arm (7) and/or the table (5) comprising displacement devices for displacing the end of the arm (7) and the table (5) with respect to each other in first and second orthogonal directions (X, Y), and
means capable of injecting, into one (17a) of the fibers (17), a light beam having a wavelength such that light is scattered from the lateral walls of the fiber (17a) with a power greater than 1 µW, preferably greater than 3 µW, per fiber centimeter.

14. The test station of claim 13, wherein step b) of claim 1 is implemented in automated fashion.
